# EUROPÄISCHE PATENTSCHRIFT

(11) **EP 4 345 684 B1**
(45) Veröffentlichungstag und Bekanntmachung des Hinweises auf die Patenterteilung: **05.11.2025**
(21) Anmeldenummer: 23193797.0
(22) Anmeldetag: 29.08.2023
(51) Int. Cl.: G06K 19/077

(54) **FUNKTRANSPONDER**
RADIO TRANSPONDER
TRANSPONDEUR RADIO

(30) Priorität: 29.09.2022 DE 102022210359
(43) Veröffentlichungstag der Anmeldung: 03.04.2024
(73) Patentinhaber: ContiTech Techno-Chemie GmbH, 61184 Karben (DE)
(72) Erfinder: Linzmaier, Markus, 30165 Hannover (DE); Borchert, Lukas, 30165 Hannover (DE); Stolle, Enrico, 30165 Hannover (DE); Witt, Erika, 30165 Hannover (DE); Tauber, Marco, 30165 Hannover (DE)
(74) Vertreter: Preusser, Andrea

(56) Entgegenhaltungen:
- EP-A1- 3 115 937
- EP-A1- 3 179 413
- EP-A1- 3 425 570
- DE-A1- 102006 051 379
- US-A1- 2006 044 769
- US-A1- 2010 321 161
- US-A1- 2014 246 503
- US-A1- 2018 174 015

## Beschreibung

Die vorliegende Erfindung betrifft einen Funktransponder, mit einem Chip, einer mit dem Chip elektrisch leitend verbundenen Primärantenne und einer mit der Primärantenne berührungslos gekoppelten Sekundärantenne. Ferner betrifft die vorliegende Erfindung eine Fluidleitung mit einem solchen Funktransponder sowie ein Verfahren zur Herstellung einer solchen Fluidleitung.

Derartige Funktransponder sind - z.B. in Form von RFID-Tags - aus dem Stand der Technik bekannt und werden in vielen Gebieten zur Kennzeichnung bzw. Identifizierung von Waren oder anderen Objekten verwendet. Bei gängigen RFID-Tags sind der Chip und die Primärantenne in einem gemeinsamen Gehäuse eingebettet. Chip und Primärantenne bilden bereits einen funktionsfähigen RFID-Tag aus, der jedoch über eine geringe Reichweite verfügt. Durch eine Kopplung der Primärantenne mit einer in der Regel weitaus größeren Sekundärantenne kann die Reichweite des RFID-Tags wesentlich erhöht und werden. Während der Chip üblicherweise elektrisch leitend mit der Primärantenne verbunden ist, ist die elektrische Kopplung der Primärantenne mit der Sekundärantenne berührungslos, z.B. induktiv, ausgeführt. Ein Beispiel für einen solchen als RFID-Tag ausgeführten Funktransponder ist in der JP 2018078525 A beschrieben.

US 2010/321161 A1 reflektiert den Oberbegriff von Anspruch 1.

Gängige Funktransponder der vorbeschriebenen Art sind im Wesentlichen als rechteckige Klebeetiketten ausgeführt, die händisch von außen an dem jeweiligen Waren befestigt werden müssen. Insbesondere auf dem Gebiet der Herstellung von Schläuchen oder anderen Fluidleitungen, die in der Regel zunächst als ggf. mehrlagige Endlosteile gefertigt und anschließend konfektioniert werden, hat sich eine händische Applikation als unwirtschaftlich herausgestellt. Gleichwohl ist eine Automatisierung der Applikation mit einem hohen Kostenaufwand verbunden. Zudem lassen sich gängige Funktransponder aufgrund ihrer Geometrie nicht optimal in einer Lage oder zwischen Lagen einer Fluidleitung integrieren.

Aufgabe der vorliegenden Erfindung ist es daher, einen Funktransponder bereitzustellen, der einfach in der Herstellung ist und eine kompakte Geometrie aufweist. Insbesondere soll ein Funktransponder bereitgestellt werden, der sich besser für Kennzeichnung von Fluidleitungen unterschiedlichster Geometrien eignet.

Diese Aufgabe wird durch einen Funktransponder mit den Merkmalen des Anspruchs 1 gelöst. Ferner sind eine Fluidleitung mit den Merkmalen des Anspruchs 6, ein Herstellungsverfahren gemäß Anspruch 8 sowie ein Herstellungsverfahren gemäß Anspruch 10 Gegenstand der Erfindung. Bevorzugte Merkmale sind Gegenstand der abhängigen Ansprüche. Weitere Vorteile und Merkmale sind der allgemeinen Beschreibung sowie den Ausführungsbeispielen zu entnehmen.

Der erfindungsgemäße Funktransponder weist einen Chip, eine mit dem Chip elektrisch leitend verbundene wendelförmige Primärantenne sowie eine mit der Primärantenne berührungslos gekoppelte, draht- oder garnförmige Sekundärantenne auf. Ein Längsabschnitt der Sekundärantenne erstreckt sich hierbei im Wesentlichen entlang der Wendelachse der Primärantenne durch die Primärantenne hindurch.

Bei dieser konstruktiven Ausgestaltung wird ein besonders kompakter Aufbau realisiert, in dem ein Teil der Sekundärantenne innerhalb der Primärantenne angeordnet wird. Der innerhalb der Primärantenne verlaufende Längsabschnitt der Sekundärantenne befindet sich im Wirkungsfeld der Primärantenne und gewährleistet eine zuverlässige elektro-magnetische Kopplung (z.B. eine induktive Kopplung) der Antennen. Bevorzugt ist der Längsabschnitt der Sekundärantenne im Wesentlichen linear, d.h. beispielsweise nicht wendelförmig oder spiralförmig, ausgebildet, was einen besonders kompakten Aufbau ermöglicht. Für eine optimale Kopplung erstreckt sich der innerhalb der Aufnahme angeordnete Längsabschnitt der Sekundärantenne im Wesentlichen auf der Wendelachse.

Der erfindungsgemäße Funktransporter lässt sich aufgrund seiner Kompaktheit problemlos in eine Lage einer Wandung einer Fluidleitung einbetten oder zwischen zwei Lagen einer mehrlagigen Wandung einer Fluidleitung einbringen.

Bevorzugt ist der Funktransponder ein RFID-Tag und der Chip ein RFID-Chip. Insbesondere ist die Sekundärantenne von einem Draht oder einem leitfähigen Garn, insbesondere von einem Hybridgarn, ausgebildet.

In einer bevorzugten Ausgestaltung des erfindungsgemäßen Funktransponders weist der Funktransponder einen Träger auf, in dem oder auf dem die Primärantenne angeordnet ist, wobei der Träger eine Aufnahme ausbildet, die sich entlang der Wendelachse der Primärantenne erstreckt, wobei der Längsabschnitt der Sekundärantenne in der Aufnahme angeordnet ist. Mithilfe des Trägers können die Antennen präzise zueinander positioniert werden, wodurch die Funktionalität des Funktransponders sichergestellt wird. Durch die Anordnung der Aufnahme kann beispielsweise ein definierter radialer Abstand zwischen dem Längsabschnitt der Sekundärantenne und der Primärantenne vorgeben werden. Der oder die Bereiche der Sekundärantenne, die sich außerhalb der Primärantenne befinden, können bezüglich ihrer Geometrie auf den jeweiligen Anwendungsfall beliebig angepasst werden. Beispielsweise kann sich bei einer mit dem Funktransponder gekennzeichneten Fluidleitung die Sekundärantenne in Längsrichtung und/oder in Umfangsrichtung der Fluidleitung oder wendelförmig um die Längsachse der Fluidleitung erstrecken. Der Längsabschnitt der Sekundärantenne kann dabei lose oder fest in dem Träger angeordnet sein. Die Aufnahme kann beispielsweise derart an den Querschnitt bzw. Durchmesser der Sekundärantenne angepasst sein, dass sich ein gewisser Reibschluss zwischen Träger und Sekundärantenne ergibt, so dass die Sekundärantenne nicht aus der Aufnahme herausfallen kann. Bevorzugt weist der Träger einen sich um die Wendelachse der Primärantenne rotationssymmetrisch erstreckenden Körper auf.

Vorzugsweise ist der Chip auf oder in dem Träger angeordnet. So kann der Funktransponder im Wesentlichen aus zwei Teilen aufgebaut werden: Dem Träger, auf oder in dem die Primärantenne und der Chip angeordnet sind, und der Sekundärantenne. Dies ermöglicht eine einfache Herstellung des Funktransponders. Überdies kann der Funktransponder auf diese Weise leicht in eine Fluidleitung integriert werden, indem z.B. zuerst ein Teil der Sekundärantenne an der Fluidleitung angeordnet wird und anschließend ein Längsabschnitt der Sekundärantenne in der Aufnahme des Trägers positioniert wird. Ersichtlich kann auch zuerst der Träger an der Fluidleitung angeordnet und anschließend ein Längsabschnitt der Sekundärantenne in der Aufnahme des Trägers positioniert werden. In einer beispielhaften Ausführungsform der Erfindung kann auf der Sekundärantenne ein Stopper, z.B. in Form eines Klebepunkts, als Positionierhilfe befestigt werden, der einen Anschlag für den aufgefädelten Träger ausbildet.

In einer weiteren bevorzugten Ausgestaltung des erfindungsgemäßen Funktransponders ist die Aufnahme als Durchgangsbohrung ausgebildet ist, durch die sich der Längsabschnitt der Sekundärantenne hindurch erstreckt. Mit anderen Worten ist der Träger auf der draht- oder garnförmigen Sekundärantenne aufgefädelt. Dies ermöglicht eine flexible Positionierung des Trägers entlang der Längsrichtung der Sekundärantenne, wodurch sich der erfindungsgemäße Funktransponder an verschiedene Waren- bzw. Objektgeometrien optimal anpassen lässt. In vielen Anwendungsfällen ist eine mittige Positionierung des Trägers auf der Sekundärantenne vorteilhaft. Sollte jedoch die Geometrie eines Objekts eine exakt mittige Positionierung nicht erlauben, kann bei dem erfindungsgemäßen Funktransponder der Träger problemlos in eine außermittige Position auf der Sekundärantenne verschoben werden. Bevorzugt ist der Träger im mittleren Drittel (bezogen auf die Gesamtlänge der Sekundärantenne) auf der Sekundärantenne aufgefädelt.

In einer weiteren bevorzugten Ausgestaltung des erfindungsgemäßen Funktransponders ist die Primärantenne und/oder der Chip in dem Träger eingebettet. Dies ermöglicht eine Kapselung dieser Bauteile zum Schutz vor äußeren Einflüssen. In dem Träger eingebettet, eignen sich Chip und Primärantenne beispielsweise dazu, umspritzt oder in eine nicht ausgehärtete Lage einer Fluidleitung eingebracht zu werden, ohne dass diese Bauteile beschädigt werden. Im Sinne dieser Erfindung ist die Primärantenne bzw. der Chip in dem Träger insbesondere dann als eingebettet zu betrachten, wenn die Primärantenne bzw. der Chip vollständig von dem Trägermaterial umgeben, z.B. umspritzt oder umgossen, sind.

Gemäß dem bereits vor- sowie dem weiter unten nachbeschriebenen wird die eingangs gestellte Aufgabe auch durch eine Fluidleitung mit den Merkmalen des Anspruchs 6 gelöst.

Die erfindungsgemäße Fluidleitung hat einen Funktransponder nach einem der Ansprüche 1 bis 5, der an der Fluidleitung angeordnet ist oder in einer Wandung der Fluidleitung angeordnet, insbesondere in eine Lage der Wandung oder zwischen zwei Lagen der Wandung eingebettet, ist. Aufgrund der besonderen konstruktiven Ausgestaltung des Funktransponders kann dieser in einfacher und zuverlässiger Weise flexibel an der Fluidleitung angeordnet werden und diese kennzeichnen. Bevorzugt erstreckt sich die Sekundärantenne in Längsrichtung und/oder in Umfangsrichtung der Fluidleitung oder wendelförmig um die Längsachse der Fluidleitung. Insbesondere erstreckt sich die Sekundärantenne entlang der Längsrichtung der Fluidleitung zumindest über die halbe Gesamtlänge der Fluidleitung, bevorzugt über die gesamte Länge der Fluidleitung. Auf diese Weise kann eine gute Reichweite des Funktransponders gewährleistet werden. Insbesondere ist der Funktransponder zwischen zwei Lagen der Wandung der Fluidleitung angeordnet und so vor Beschädigungen geschützt. Bevorzugt ist der Funktransponder in eine Lage der Wandung der Fluidleitung eingebettet, wodurch der Funktransponder vor Beschädigungen und ferner vor etwaigen zwischen zwei Lagen der Fluidleitung auftretenden Reibungskräften zwischen zwei Lagen geschützt ist.

Gemäß dem bereits vor- sowie dem weiter unten nachbeschriebenen wird die eingangs gestellte Aufgabe auch durch ein Verfahren mit den Merkmalen des Anspruchs 8 gelöst.

Das erfindungsgemäße Verfahren zur Herstellung einer Fluidleitung nach Anspruch 6, umfasst folgende Schritte:
- Einführen der Sekundärantenne in die Aufnahme des Trägers;
- Optional: Befestigen der Sekundärantenne an dem Träger; und
- Befestigen des Trägers und/oder der Sekundärantenne an der Fluidleitung.

Aufgrund der besonderen konstruktiven Ausgestaltung des Funktransponders kann dieser in einfacher und zuverlässiger Weise flexibel an der Fluidleitung angeordnet werden und diese kennzeichnen. Die beiden Baugruppen, Träger und Sekundärantenne, können dabei in einfacher Weise automatisiert auf der Fluidleitung appliziert werden.

In einer bevorzugten Ausgestaltung des erfindungsgemäßen Verfahrens wird der Träger und/oder die Sekundärantenne in eine nicht ausgehärtete Lage der Wandung der Fluidleitung oder zwischen zwei Lagen der Wandung der Fluidleitung eingebettet. Dadurch ist der Funktransponder vor Beschädigungen und ferner vor etwaigen zwischen zwei Lagen der Fluidleitung auftretenden Reibungskräften geschützt.

Gemäß dem bereits vor- sowie dem weiter unten nachbeschriebenen wird die eingangs gestellte Aufgabe auch durch ein Verfahren mit den Merkmalen des Anspruchs 8 gelöst.

Das erfindungsgemäße Verfahren zur Herstellung einer Fluidleitung nach Anspruch 6, umfasst folgende Schritte:
- Bereitstellen eines aufgewickelten draht- oder garnförmigen Sekundärantennenmaterials und einer Mehrzahl von Trägern mit einer als Durchgangsbohrung ausgebildeten Aufnahme, wobei die Träger auf dem Sekundärantennenmaterial aufgereiht sind;
- Abwickeln eines Teils des Sekundärantennenmaterials in einer vorbestimmten Länge, die der Länge der Sekundärantenne auf der Fluidleitung entspricht, gemeinsam mit einem Träger der Mehrzahl von Trägern;
- Befestigen des Trägers und/oder des Teils des Sekundärantennenmaterials an der Fluidleitung; und
- Ablängen des Teils des Sekundärantennenmaterials von dem restlichen Sekundärantennenmaterial.

Das z.B. auf einer Rolle aufgewickelte Sekundärantennenmaterial, auf dem die Träger aufgereiht bzw. aufgezogen sind ermöglicht eine kontinuierliche und dosierbare Zuführung der Bauteile, die den Funktransponder ausbilden. Auf diese Weise kann die Applikation des Funktransponders auf der Fluidleitung in einfacher Weise automatisiert werden. Das Sekundärantennenmaterial wird in einer vorbestimmten Länge abgewickelt. Auf dem abgewickelten Teil soll sich genau ein Träger befinden. Dies kann beispielsweise dadurch realisiert werden, dass die Träger in vorgegebenen Abständen auf dem Sekundärantennenmaterial befestigt sind. Alternativ kann eine Konfiguration gewählt werden, bei der das Sekundärantennenmaterial beim Abwickeln durch die einzelnen Träger hindurchbewegt wird, wobei die Träger mittels einer Rückhaltevorrichtung festgehalten werden, um nicht mit dem Sekundärantennenmaterial wegbewegt zu werden. Für eine vorbestimmte Länge an abgewickeltem Material kann dann von der Rückhaltevorrichtung jeweils ein Träger dosiert freigegeben werden. Anschließend kann der Träger und/oder die Sekundärantenne an der Fluidleitung befestigt werden. Bevorzugt wird der Träger und/oder die Sekundärantenne hierzu in eine nicht ausgehärtete Lage der Wandung der Fluidleitung oder zwischen zwei Lagen der Wandung der Fluidleitung eingebettet. Dadurch ist der Funktransponder vor Beschädigungen und ferner vor etwaigen zwischen zwei Lagen der Fluidleitung auftretenden Reibungskräften geschützt.

Das Befestigen des Trägers und/oder der Sekundärantenne an der Fluidleitung und das Ablängen des Teils des Sekundärantennenmaterials von dem restlichen Sekundärantennenmaterial können dabei in unterschiedlicher Reihenfolge erfolgen.

Das Ablängen des Teils des Sekundärantennenmaterials von dem restlichen Sekundärantennenmaterial kann dabei gleichzeitig mit dem Ablängen der Fluidleitung von einem insbesondere extrudierten Fluidleitungsmaterial erfolgen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: ein Ausführungsbeispiel eines erfindungsgemäßen Funktransponders in einer Schnittdarstellung;
- Fig. 2: ein Ausführungsbeispiel einer erfindungsgemäßen Fluidleitung mit einem erfindungsgemäßen Funktransponder; und
- Fig. 3: ein Ausführungsbeispiel eines erfindungsgemäßen Verfahrens zur Herstellung einer erfindungsgemäßen Fluidleitung mit einem erfindungsgemäßen Funktransponder.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

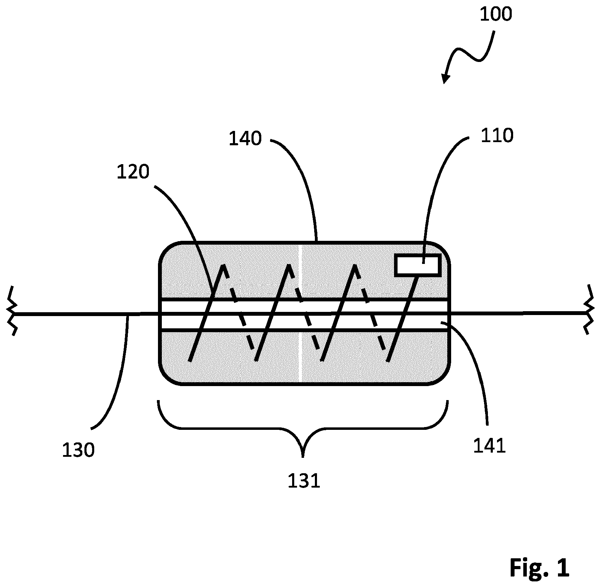

Fig. 1 zeigt einen erfindungsgemäßen Funktransponder 100 mit einem Chip 110, einer mit dem Chip 110 elektrisch leitend verbundenen wendelförmigen Primärantenne 120 und einer mit der Primärantenne 120 berührungslos (z.B. induktiv) gekoppelten, draht- oder garnförmigen Sekundärantenne 130. Ein Längsabschnitt 131 der Sekundärantenne 130 erstreckt sich entlang der Wendelachse der Primärantenne 120 durch die Primärantenne 120 hindurch. Die Wendelachse der Primärantenne 120 ist dabei eine gedachte Achse, um die herum sich die Primärantenne 120 wendelförmig erstreckt. Mit anderen Worten erstreckt sich der Längsabschnitt 131 der Sekundärantenne 130 innerhalb der Primärantenne 120. Auf diese Weise wird ein besonders kompakter Aufbau des Funktransponders 100 und gleichzeitig eine zuverlässige berührungslose Kopplung zwischen Primärantenne 120 und Sekundärantenne 130 realisiert. In der vorliegenden Ausführungsform ist der Längsabschnitt 131 der Sekundärantenne linear ausgebildet, d.h. der Längsabschnitt 131nverläuft innerhalb der Primärantenne nicht wendelförmig oder spiralförmig. Dies ermöglicht einen kompakten sowie besonders simplen Aufbau des Funktransponders 100. Die Sekundärantenne ist bevorzugt von einem leitfähigen Draht oder einem leitfähigen Garn, insbesondere von einem Hybridgarn, ausgebildet.

Der Funktransponder 100 ist beispielsweise ein mit einem RFID-Chip versehener RFID-Transponder.

Der in Fig. 1 gezeigte Funktransponder 100 weist einen Träger 140 auf, in dem sowohl die Primärantenne 120 als auch der Chip 110 eingebettet sind. Dadurch werden diese Bauteile gegenüber der Umgebung gekapselt und somit vor äußeren mechanischen und/oder thermischen Einflüssen schützt. Durch diese Kapselung ist der Träger besonders gut dazu geeignet, in eine nicht ausgehärtete Lage (z.B. eine nicht abgekühlte thermoplastische Lage) einer Wandung einer Fluidleitung 200 eingebettet zu werden. Der Träger 140 bildet eine sich entlang der Wendelachse der Primärantenne 140 erstreckende Aufnahme 141 für die Sekundärantenne 130 aus. Die Aufnahme 141 ist dabei als Durchgangsbohrung ausgebildet, durch die sich der Längsabschnitt 131 der Sekundärantenne 130 hindurch erstreckt. Durch diese Konstruktion kann die Sekundärantenne 130 in einfacher Weise entlang der Wendelachse der Primärantenne 120 positioniert werden. Gleichzeitig bietet diese Konstruktion eine hohe Flexibilität hinsichtlich der Relativposition der Primärantenne 120 und der Sekundärantenne 130 zueinander. Überdies ist aufgrund dieser konstruktiven Ausgestaltung eine besonders einfache und leicht automatisierbare Herstellung des Funktransponders 100 möglich. Der Träger 140, in dem der Chip 110 und die Primärantenne 120 eingebettet sind, kann zur Ausbildung des Funktransponders 100 z.B. nach Art einer Perle auf der draht- oder garnförmigen Sekundärantenne aufgezogen werden. Der Träger 140 weist einen sich um die Wendelachse der Primärantenne 120 rotationssymmetrisch erstreckenden Körper auf.

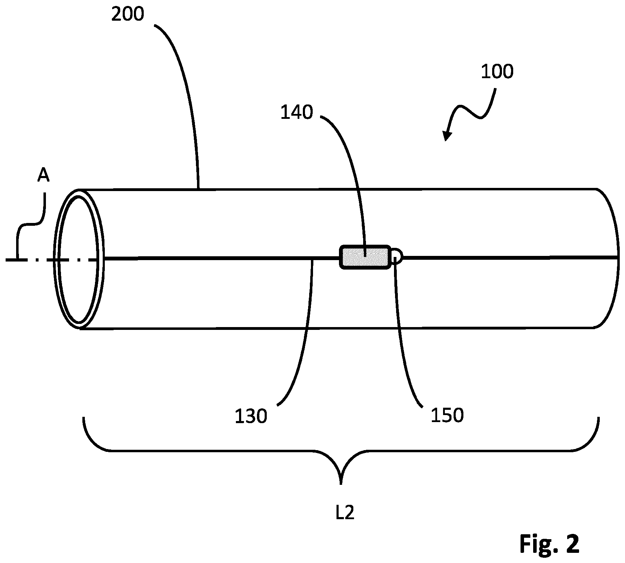

Fig. 2 zeigt eine erfindungsgemäße Fluidleitung 200, der zur Kennzeichnung mit einem erfindungsgemäßen Funktransponder 100, wie er beispielsweise in Fig. 1 gezeigt ist, versehen ist. Der den Chip 110 sowie die Primärantenne 120 enthaltende Träger 140 ist auf die Sekundärantenne 130 aufgezogen. Optional kann als Positionierhilfe auf der Sekundärantenne 130 ein Klebepunkt 150 appliziert sein, der als Anschlag für den perlenartigen Träger 140 dient. Alternativ kann der Innendurchmesser der Aufnahme 141 derart auf den Außendurchmesser der Sekundärantenne 130 angepasst sein, dass zwischen diesen Bauteilen eine Reibkraft entsteht, so dass der Träger 140 sich nicht von allein entlang der Sekundärantenne 130 verschiebt, allerdings mit nicht allzu großem Kraftaufwand manuell oder mechanisch dennoch verschiebbar ist. Der Träger 140 und/oder die Sekundärantenne 130 sind an der Fluidleitung 200 befestigt. Bevorzugt sind der Träger 140 und/oder die Sekundärantenne 130 in eine nicht ausgehärtete Lage der Wandung der Fluidleitung 200 oder zwischen zwei Lagen der Wandung der Fluidleitung 200 eingebettet. Der erfindungsgemäße Funktransporter 100 ist aufgrund seiner Kompaktheit, insbesondere seinem kleinen Querschnittsprofil, und seiner einfachen Zusammensetzbarkeit hierzu optimal geeignet.

Die Sekundärantenne 130 erstreckt sich in Längsrichtung der Fluidleitung 200 (parallel zu deren Längsachse A) über die gesamte Länge L2 der Fluidleitung 200. Durch die Flexibilität der Sekundärantenne 130 und der leicht variierbaren Position der Primärantenne 120 samt Chip 110 in Relation zur Sekundärantenne, lassen sich jedoch auch andere Geometrien des Funktransponders 100 realisierten. So lässt sich die Sekundärantenne 130 in einfacher Weise auch in Umfangsrichtung der Fluidleitung 200 oder wendelförmig um die Längsachse A der Fluidleitung 200 verlaufend anordnen.

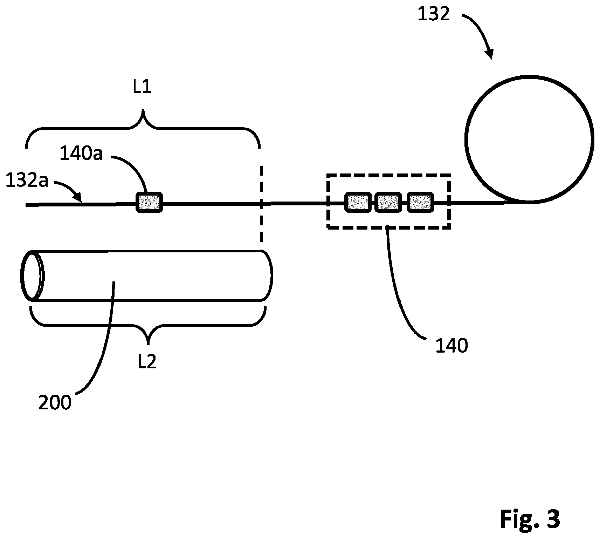

Anhand der Fig. 3 wird nun eine Ausführungsform des erfindungsgemäßen Verfahrens zur Herstellung einer erfindungsgemäßen Fluidleitung 200 beschrieben. Hierzu wird zunächst ein aufgewickeltes draht- oder garnförmiges Sekundärantennenmaterial 132 sowie eine Mehrzahl von Trägern 140 bereitgestellt. Die Träger 140 weisen eine als Durchgangsbohrung ausgebildete Aufnahme 141 auf und sind nach Art einer "Perlenkette" auf dem Sekundärantennenmaterial 132 aufgereiht. Anschließend wird ein Teil des Sekundärantennenmaterials 132a in einer vorbestimmten Länge L1, die der Länge der auszubildenden Sekundärantenne 130 auf der Fluidleitung 200 entspricht, gemeinsam mit einem Träger 140a der Mehrzahl von Trägern 140 abgewickelt. Anschließend wird der Träger 140a und/oder der Teil des Sekundärantennenmaterials 132a an der Fluidleitung 200 befestigt, vorzugsweise in eine nicht ausgehärtete Lage der Wandung der Fluidleitung 200 oder zwischen zwei Lagen der Wandung der Fluidleitung 200 eingebettet. Vor oder nach dem Befestigen des Trägers 140a und/oder des Teils des Sekundärantennenmaterials 132a wird der Teil des Sekundärantennenmaterials 132a von dem restlichen Sekundärantennenmaterial 132 getrennt.

Beim Abwickeln wird das Sekundärantennenmaterial 132 durch die einzelnen Träger 140 hindurchbewegt. Die Träger können mittels einer (nicht dargestellten) Rückhaltevorrichtung festgehalten werden, um nicht mit dem Sekundärantennenmaterial 132 mitbewegt zu werden. Die Rückhaltevorrichtung kann dazu eingerichtet sein, für eine vorbestimmte Länge L2 jeweils einen Träger 240 freizugeben.

Das beschriebene Verfahren eignet sich besonders gut dazu, parallel zum Herstellungsprozess der Fluidleitung 200, z.B. mittels Extrusion, durchgeführt zu werden. Das draht- oder garnförmige Sekundärantennenmaterial 132 kann laufend einer als Endlosteil gefertigten (z.B. extrudierten) Fluidleitung 200 zugeführt werden, wobei ein auf dem Sekundärantennenmaterial 132 aufgereihter Träger 140 in vorbestimmten Abständen dosiert zugeführt werden kann. Das Ablängen des Teils des Sekundärantennenmaterials 132a von dem restlichen Sekundärantennenmaterial 132 kann in diesem Fall gleichzeitig mit dem Ablängen der Fluidleitung 200 auf ihre vorbestimmte Länge erfolgen.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Funktransponder (100), insbesondere RFID-Tag, mit einem Chip (110),
einer mit dem Chip (110) elektrisch leitend verbundenen Primärantenne (120),
einer mit der Primärantenne (120) berührungslos gekoppelten, draht- oder garnförmigen Sekundärantenne (130), **dadurch gekennzeichnet, dass** es sich um eine wendelförmige Primärantenne (120) handelt,
wobei sich ein Längsabschnitt (131) der Sekundärantenne (130) entlang der Wendelachse der Primärantenne (120) durch die Primärantenne (120) hindurch erstreckt.

2. Funktransponder (100) nach Anspruch 1 mit einem Träger (140), in dem oder auf dem die Primärantenne (120) angeordnet ist, wobei der Träger (140) eine Aufnahme (141) ausbildet, die sich entlang der Wendelachse der Primärantenne (120) erstreckt, wobei der Längsabschnitt (131) der Sekundärantenne (130) in der Aufnahme (141) angeordnet ist.

3. Funktransponder (100) nach Anspruch 2, wobei die Aufnahme (141) als Durchgangsbohrung ausgebildet ist, durch die sich der Längsabschnitt (131) der Sekundärantenne (130) hindurch erstreckt.

4. Funktransponder (100) nach einem der Ansprüche 2 oder 3, wobei die Primärantenne (120) und/oder der Chip (110) in dem Träger (140) eingebettet ist.

5. Funktransponder (100) nach einem der vorangehenden Ansprüche, wobei die Sekundärantenne (130) von einem Draht oder einem leitfähigen Garn, insbesondere von einem Hybridgarn, ausgebildet ist.

6. Fluidleitung mit einem Funktransponder (100) nach einem der Ansprüche 1 bis 5, der an der Fluidleitung angeordnet ist oder in einer Wandung der Fluidleitung angeordnet, insbesondere in eine Lage der Wandung oder zwischen zwei Lagen der Wandung eingebettet, ist.

7. Fluidleitung (200) nach Anspruch 6, wobei sich die Sekundärantenne (130) in Längsrichtung und/oder in Umfangsrichtung der Fluidleitung (200) oder wendelförmig um die Längsachse (A) der Fluidleitung (200) erstreckt.

8. Verfahren zur Herstellung einer Fluidleitung (200) nach Anspruch 6, umfassend folgende Schritte:
- Einführen der Sekundärantenne (130) in die Aufnahme (141) des Trägers (140);
- Optional: Befestigen der Sekundärantenne (130) an dem Träger (140); und
- Befestigen des Trägers (140) und/oder der Sekundärantenne (130) an der Fluidleitung (200).

9. Verfahren nach Anspruch 8, wobei der Träger (140) und/oder die Sekundärantenne (130) in eine nicht ausgehärtete Lage der Wandung der Fluidleitung (200) oder zwischen zwei Lagen der Wandung der Fluidleitung (200) eingebettet wird.

10. Verfahren zur Herstellung einer Fluidleitung (200) nach Anspruch 6, umfassend folgende Schritte:
- Bereitstellen eines aufgewickelten draht- oder garnförmigen Sekundärantennenmaterials (132) und einer Mehrzahl von Trägern (140) mit einer als Durchgangsbohrung ausgebildeten Aufnahme (141), wobei die Träger (140) auf dem Sekundärantennenmaterial (132) aufgereiht sind;
- Abwickeln eines Teils des Sekundärantennenmaterials (132') in einer vorbestimmten Länge (L1), die der Länge der Sekundärantenne (130) auf der Fluidleitung (200) entspricht, gemeinsam mit einem Träger (140) der Mehrzahl von Trägern (140);
- Befestigen des Trägers (140) und/oder der Sekundärantenne (130) an der Fluidleitung (200); und
- Trennen des Teils des Sekundärantennenmaterials (132') von dem restlichen Sekundärantennenmaterial (132).

11. Verfahren nach Anspruch 10, wobei der Träger (140) und/oder die Sekundärantenne (130) in eine nicht ausgehärtete Lage der Wandung der Fluidleitung (200) oder zwischen zwei Lagen der Wandung der Fluidleitung (200) eingebettet wird.

## Claims

1. Radio transponder (100), in particular RFID tag, comprising a chip (110),
a primary antenna (120) electrically conductively connected to the chip (110),
a wire- or yarn-like secondary antenna (130) contactlessly coupled to the primary antenna (120), **characterized in that** the primary antenna is a helical primary antenna (120),
wherein a longitudinal section (131) of the secondary antenna (130) extends through the primary antenna (120) along the helix axis of the primary antenna (120).

2. Radio transponder (100) according to Claim 1, comprising a carrier (140) in which or on which the primary antenna (120) is arranged, wherein the carrier (140) forms a receptacle (141) which extends along the helix axis of the primary antenna (120), wherein the longitudinal section (131) of the secondary antenna (130) is arranged in the receptacle (141).

3. Radio transponder (100) according to Claim 2, wherein the receptacle (141) is formed as a passage hole through which the longitudinal section (131) of the secondary antenna (130) extends.

4. Radio transponder (100) according to either of Claims 2 and 3, wherein the primary antenna (120) and/or the chip (110) are/is embedded in the carrier (140).

5. Radio transponder (100) according to any of the preceding claims, wherein the secondary antenna (130) is formed by a wire or a conductive yarn, in particular by a hybrid yarn.

6. Fluid line having a radio transponder (100) according to any of Claims 1 to 5 which is arranged on the fluid line or is arranged in a wall of the fluid line, in particular embedded into a layer of the wall or between two layers of the wall.

7. Fluid line (200) according to Claim 6, wherein the secondary antenna (130) extends in the longitudinal direction and/or in the circumferential direction of the fluid line (200) or helically around the longitudinal axis (A) of the fluid line (200).

8. Method for producing a fluid line (200) according to Claim 6, comprising the following steps:
- inserting the secondary antenna (130) into the receptacle (141) of the carrier (140);
- optionally: fastening the secondary antenna (130) to the carrier (140); and
- fastening the carrier (140) and/or the secondary antenna (130) to the fluid line (200).

9. Method according to Claim 8, wherein the carrier (140) and/or the secondary antenna (130) are/is embedded into a non-cured layer of the wall of the fluid line (200) or between two layers of the wall of the fluid line (200).

10. Method for producing a fluid line (200) according to Claim 6, comprising the following steps:
- providing a wound-up wire- or yarn-like secondary antenna material (132) and a plurality of carriers (140) having a receptacle (141) formed as a passage hole, wherein the carriers (140) are lined up on the secondary antenna material (132);
- unwinding a portion of the secondary antenna material (132') to a predetermined length (L1) which corresponds to the length of the secondary antenna (130) on the fluid line (200) together with one carrier (140) of the plurality of carriers (140);
- fastening the carrier (140) and/or the secondary antenna (130) to the fluid line (200); and
- separating the portion of the secondary antenna material (132') from the rest of the secondary antenna material (132).

11. Method according to Claim 10, wherein the carrier (140) and/or the secondary antenna (130) are/is embedded into a non-cured layer of the wall of the fluid line (200) or between two layers of the wall of the fluid line (200).

## Revendications

1. Transpondeur radio (100), en particulier étiquette RFID, comprenant :
une puce (110),
une antenne primaire (120) reliée de manière électriquement conductrice à la puce (110),
une antenne secondaire (130) en forme de fil ou de filament, couplée sans contact à l'antenne primaire (120), **caractérisé en ce qu'**il s'agit d'une antenne primaire (120) hélicoïdale,
une partie longitudinale (131) de l'antenne secondaire (130) s'étendant à travers l'antenne primaire (120) le long de l'axe hélicoïdal de l'antenne primaire (120).

2. Transpondeur radio (100) selon la revendication 1, comprenant un support (140) dans lequel ou sur lequel est disposée l'antenne primaire (120), le support (140) formant une cavité (141) qui s'étend le long de l'axe hélicoïdal de l'antenne primaire (120), la partie longitudinale (131) de l'antenne secondaire (130) étant disposée dans la cavité (141).

3. Transpondeur radio (100) selon la revendication 2, dans lequel la cavité (141) est conçue sous forme de trou traversant, à travers lequel s'étend la section longitudinale (131) de l'antenne secondaire (130).

4. Transpondeur radio (100) selon l'une des revendications 2 ou 3, dans lequel l'antenne primaire (120) et/ou la puce (110) sont incorporées dans le support (140).

5. Transpondeur radio (100) selon l'une des revendications précédentes, dans lequel l'antenne secondaire (130) est formée par un fil ou un filament conducteur, en particulier par un filament hybride.

6. Conduite de fluide comprenant un transpondeur radio (100) selon l'une des revendications 1 à 5, qui est disposé sur la conduite de fluide ou disposé dans une paroi de la conduite de fluide, en particulier incorporé dans une couche de la paroi ou entre deux couches de la paroi.

7. Conduite de fluide (200) selon la revendication 6, dans laquelle l'antenne secondaire (130) s'étend dans la direction longitudinale et/ou dans la direction circonférentielle de la conduite de fluide (200) ou de manière hélicoïdale autour de l'axe longitudinal (A) de la conduite de fluide (200).

8. Procédé de fabrication d'une conduite de fluide (200) selon la revendication 6, comprenant les étapes suivantes :
- l'introduction de l'antenne secondaire (130) dans la cavité (141) du support (140) ;
- facultativement : la fixation de l'antenne secondaire (130) sur le support (140) ; et
- la fixation du support (140) et/ou de l'antenne secondaire (130) sur la conduite de fluide (200).

9. Procédé selon la revendication 8, dans lequel le support (140) et/ou l'antenne secondaire (130) est (sont) incorporé(s) dans une couche non durcie de la paroi de la conduite de fluide (200) ou entre deux couches de la paroi de la conduite de fluide (200).

10. Procédé de fabrication d'une conduite de fluide (200) selon la revendication 6, comprenant les étapes suivantes :
- la mise à disposition d'un matériau d'antenne secondaire (132) enroulé en forme de fil ou de filament et d'une pluralité de supports (140) présentant une cavité (141) conçue sous forme de trou traversant, les supports (140) étant enfilés sur le matériau d'antenne secondaire (132) ;
- le déroulement d'une partie du matériau d'antenne secondaire (132') sur une longueur prédéterminée (L1) qui correspond à la longueur de l'antenne secondaire (130) sur la conduite de fluide (200), conjointement avec un support (140) de la pluralité de supports (140) ;
- la fixation du support (140) et/ou de l'antenne secondaire (130) sur la conduite de fluide (200) ; et
- la séparation de la partie du matériau d'antenne secondaire (132') d'avec le reste du matériau d'antenne secondaire (132).

11. Procédé selon la revendication 10, dans lequel le support (140) et/ou l'antenne secondaire (130) est (sont) incorporé(s) dans une couche non durcie de la paroi du conduit de fluide (200) ou entre deux couches de la paroi de la conduite de fluide (200).
